# EUROPÄISCHE PATENTSCHRIFT

(11) **EP 2 539 761 B1**
(45) Veröffentlichungstag und Bekanntmachung des Hinweises auf die Patenterteilung: **14.03.2018**
(21) Anmeldenummer: 11701939.8
(22) Anmeldetag: 25.01.2011
(51) Int. Cl.: G02C 5/22

(54) **FEDERSCHARNIER**
SPRING HINGE
CHARNIÈRE À RESSORT

(30) Priorität: 24.02.2010 DE 102010009930
(43) Veröffentlichungstag der Anmeldung: 02.01.2013
(73) Patentinhaber: OBE Ohnmacht & Baumgärtner GmbH & Co. KG, 75228 Ispringen (DE)
(72) Erfinder: FIEHN, Joerg, 75239 Eisingen (DE); WIENICKE, Frank, 75217 Birkenfeld (DE)
(74) Vertreter: Gleiss, Alf-Olav
(86) Internationale Anmeldenummer: PCT/EP2011/000289
(87) Internationale Veröffentlichungsnummer: WO 2011/103949

(56) Entgegenhaltungen:
- EP-A1- 0 632 306
- EP-A1- 0 749 027
- EP-A1- 0 822 438
- WO-A1-2011/121522
- AU-B2- 546 755
- DE-A1-102009 012 836
- FR-A1- 2 719 913
- US-A- 4 689 851
- US-A- 5 755 010

## Beschreibung

Die Erfindung betrifft ein Federscharnier einer Brille gemäß Oberbegriff des Anspruchs 1. Federscharniere der hier angesprochenen Art sind bekannt. Sie dienen dazu, den Tragekomfort einer Brille zu erhöhen, indem sie ein Überdrücken der Brillenbügel, also ein Öffnen über übliche Tragestellung hinaus, ermöglichen. Außerdem definieren sie bestimmte bevorzugte Positionen der Bügel gegenüber dem Mittelteil der Brille, nämlich den angeklappten oder den geöffneten Zustand der Bügel. Bei den bekannten Federscharnieren sind ein Scharnierelement, ein Federelement und ein Verschlussteil in ein Gehäuse eingebracht, das am Mittelteil oder an den Bügeln der Brille befestigt wird. Um Federscharniere der hier angesprochenen Art möglichst unsichtbar in Brillen zu integrieren, ist auch vorgesehen, dass das Gehäuse Teil der Bügel und/oder Teil des Mittelteils ist. Die genannten Teile, das Scharnierelement, das Federelement und das Verschlussteil werden dann in den Bügel oder das Mittelteil der Brille integriert, ohne dass es einen separaten Gehäuses bedürfte.

Bei dieser Lösung muss sichergestellt bleiben, dass das Scharnierelement optimal in dem Gehäuse, in letzterem Fall also im Mittelteil oder im Bügel einer Brille, geführt wird.

Aufgabe der Erfindung ist es daher, ein Federscharnier der hier angesprochenen Art zu schaffen, das eine optimale Führung im Gehäuse, also in Teilen der Brille, gewährleistet.

Zur Lösung dieser Aufgabe wird ein Federscharnier vorgeschlagen, dass die in Anspruch 1 genannten Merkmale umfasst.

Die Erfindung wird im Folgenden anhand der Zeichnung näher erläutert. Es zeigen:
- Figur 1: eine Explosionsdarstellung eines ersten Ausführungsbeispiels des Federscharniers;
- Figur 2: ein zweites Ausführungsbeispiel eines Federscharniers;
- Figur 3: eine vormontierte Baugruppe des Federscharniers gemäß Figur 2 und
- Figur 4: ein drittes Ausführungsbeispiel eines Federscharniers.

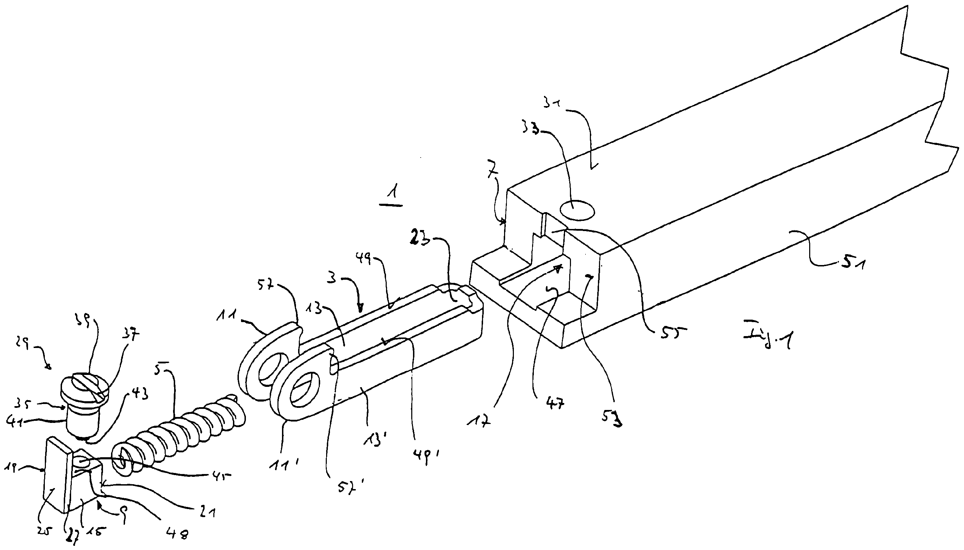

Das in Figur 1 dargestellte Ausführungsbeispiel des Federscharniers 1 umfasst ein Scharnierelement 3, ein Federelement 5, ein Gehäuse 7 und ein Verschlussteil 9. Das Scharnierelement 3 ist im Wesentlichen U-förmig ausgebildet und weist zwei in einem Abstand zueinander angeordnete Scharnieraugen 11, 11' mit Durchgangslöchern auf, durch die eine Schraube oder sonstiges Verbindungselement hindurchgreifen kann, um die Scharnieraugen 11, 11' mit denen eines Scharnier-Gegenstücks gelenkig zu verbinden. Dieses weist mindestens ein, vorzugsweise drei Scharnieraugen auf.

Die Scharnieraugen 11, 11' liegen an den Enden zweier Arme 13, 13' des Scharnierelements 3. Aus Figur 1 ist ersichtlich, dass die Höhe der Scharnieraugen 11, 11' größer ist als die der Arme 13, 13'.

Bei dem hier dargestellten Ausführungsbeispiel ist das Federelement 5 als Schraubenfeder ausgebildet. Denkbar ist es aber, hier beliebige elastische Elemente vorzusehen, beispielsweise auch Mäanderfedern oder sonstige Elemente. Die Schraubenfeder weist einen Außendurchmesser auf, der kleiner ist als der Abstand zwischen den Armen 13, 13', sodass das Federelement 5 zwischen diesen im zusammengebauten Zustand des Federscharniers 1 angeordnet werden kann.

Das Verschlussteil 9 weist einen Grundkörper 15 auf, der hier im Wesentlichen rechteckförmig ausgebildet ist. Die Breite des Grundkörpers 15 ist vorzugsweise so gewählt, dass er praktisch spielfrei in den Zwischenraum zwischen die Arme 13, 13' passt. Die Breite entspricht also dem Abstand zwischen den Innenflächen der Arme 13 und 13', sodass - im zusammengebauten Zustand des Federscharniers - die Seitenflächen des Grundkörpers 15 an den Innenflächen der Arme 13, 13' anliegen und das Scharnierelement führen. Im zusammengebauten Zustand des Federscharniers 1 liegt der Grundkörper 15 des Verschlussteils 9 zwischen den Armen des Scharnierelements, und zwar - bei der Ansicht in Figur 1 - rechts von den Scharnieraugen 11, 11'.

Die Höhe des Grundkörpers ist vorzugsweise so gewählt, dass dieser an mindestens einer Innenfläche einer Ausnehmung 17 im Gehäuse 7 anliegt.

Auf der dem Betrachter zugewandten Seite des Grundkörpers ist eine Verdrehsicherung 19 vorgesehen, deren Höhe größer ist als die des Grundkörpers 15. Daher springt die Verdrehsicherung 19 nach oben über den Grundkörper 15 vor.

Im zusammengebauten Zustand des Federscharniers liegt das Federelement 5 an der Rückseite 21 des Grundkörpers 15 des Verschlussteils 9 an und stützt sich innen an der Basis 23 des U-förmigen Scharnierelements ab, welche die beiden Arme 13, 13' miteinander verbindet. Die Vorderseite 25 der Verdrehsicherung 19 bildet eine Lauffläche des Federscharniers 1, auf der ein Nocken eines Scharnier-Gegenstücks entlanggleitet beziehungsweise abrollt. Aus diesem Grund ist die Verdrehsicherung vorzugsweise aus einem Material hergestellt, das besonders gute Gleiteigenschaften aufweist, insbesondere in Zusammenhang mit Titan, das für die Scharnieraugen des Scharnier-Gegenstücks bevorzugt verwendet wird. Eine derartige Lauffläche ist bei Gehäusen 7 aus Kunststoff besonders bevorzugt, also wenn zumindest das Ende des Bügels, in dem das Federscharnier 1 vorgesehen ist, aus Kunststoff besteht.

Die Verdrehsicherung 19 und der Grundkörper 15 können als getrennte Teile ausgebildet sein. Vorzugsweise ist aber das Verschlussteil 9 einstückig mit der Verdrehsicherung 19 ausgebildet.

Die Breite des Verschlussteils 9 beziehungsweise des Grundkörpers 15 ist so gewählt, dass die Seitenflächen des Grundkörpers an den Innenseiten der Arme 13, 13' anliegen und somit als Führung für das Scharnierelement dienen. Dieses kann sich also in eingesetztem Zustand nicht nach rechts oder links bewegen, insbesondere nicht um eine gedachte Längsachse des Federscharniers 1 verdrehen.

Auch die Verdrehsicherung 19 kann als Führung des Scharnierelements dienen, nämlich dann, wenn die Breite der Verdrehsicherung so gewählt ist, dass dessen Seitenflächen, von denen hier lediglich die Seitenfläche 27 zu sehen ist, an der Innenseite der Arme 13, 13' anliegen und das Scharnierelement 3 damit führen.

Das Verriegelungselement 9 wird in zusammengebautem Zustand des Federscharniers 1 mittels einer Befestigungseinrichtung 29 in der Ausnehmung 17 im Gehäuse 7 sicher gehalten. Dieses ist - hier auf seiner Oberseite 31 mit einer Öffnung 33 versehen - durch die das Befestigungselement hindurchgreifen und - in zusammengebautem Zustand des Federscharniers 1 - auf das Verschlussteil 9 wirken kann. Die Befestigungseinrichtung 29 weist hier eine Schraube 35 auf, die mit einem einen Eingriff 37 für ein Werkzeug aufweisenden Kopf 39 versehen ist und einem Schaft 41, der mit einem Außengewinde versehen ist. Dieses kämmt mit einem mit einem Innengewinde auf der Innenfläche der Öffnung 33 im Gehäuse 7. Es ist also möglich, die Schraube 35 festzuziehen, sodass deren Unterseite in das Innere der Ausnehmung 17 ragt und von oben eine Kraft auf das Verriegelungselement 9 ausübt. Dieses kann daher mittels der Befestigungseinrichtung 29 im Inneren des Gehäuses 7, nämlich in der Ausnehmung 17 fixiert werden.

Vorzugsweise ist an dem freien Ende des dem Kopf 39 der Schraube 35 gegenüberliegenden freien Endes des Schafts 41 ein bevorzugt zylindrischer Stift 43 vorgesehen, der in eine vorzugsweise zylindrische Öffnung 45 im Grundkörper 15 des Verschlussteils 9 eingreift. Grundsätzlich reicht es aus, das Verschlussteil 9 mit einer bevorzugt ebenen Unterseite gegen den Boden 47 der Ausnehmung 17 anzupressen, um das Verschlussteil 9 sicher in der Ausnehmung 17 zu halten. Das Verschlussteil 9 wird bereits sehr sicher im Gehäuse 7 verdrehsicher fixiert, wenn die Schraube 35 mit einer ebenen Unterseite auf die Oberseite 48 des Grundkörpers 15 eine Kraft ausübt. Besonders sicher, besonders gegen Verdrehen, wird das Verschlussteil 9 dann gehalten, wenn, wie hier vorgeschlagen, ein Stift 43 der Schraube 35 in den Grundkörper 15 eingreift.

Von der Oberseite 48 ausgehend können nach rechts und links in Bezug auf die Längsachse des Federscharniers 1, in Figur 1 in Richtung auf den Betrachter oder in entgegengesetzter Richtung, am Grundkörper 15 vorspringende Nasen vorgesehen werden, die in Figur 1 nicht dargestellt sind. Sie liegen in zusammengebautem Zustand des Federscharniers 1 auf den Oberseiten 49, 49' der Arme 13, 13' des Scharnierelements 3 auf und dienen damit als dessen Führung. Besonders bevorzugt kann bei einem abgewandelten Ausführungsbeispiel des in Figur 1 dargestellten Federscharniers 1 vorgesehen werden, dass der Grundkörper 15 quasi T-förmig ausgebildet ist. In diesem Fall springt im Bereich der Oberseite 48 rechts und links am Grundkörper 15 jeweils eine Rippe vor, die auf den Oberflächen 49, 49' der Arme 13, 13' aufliegen. In eingebautem Zustand führen diese Rippen das Scharnierelement so, dass dieses sicher am Boden 47 des Gehäuses 7 entlanggleitet, vorzugsweise spielfrei.

Bei einem weiteren hier nicht dargestellten, abgewandelten Ausführungsbeispiel des Federscharniers 1 ist das Verschlussteil 9, beziehungsweise dessen Grundkörper 15, oben und unten mit wenigstens einer Nase beziehungsweise einer Rippe versehen, die rechts und links vorspringen, sodass die Arme 13, 13' zwischen diesen Rippen geführt werden und eine Bewegung, insbesondere ein Verkippen, des Scharnierelements 3 nach oben oder unten von dem Verschlussteil 9 sicher vermieden wird. Die Höhe der Arme 13, 13' muss in diesem Fall auf den Freiraum zwischen den Rippen des dann Doppel-T-förmigen Grundköpers 15 des Verschlussteils 9 angepasst werden.

Es zeigt sich hier, dass die Seitenflächen des Grundkörpers 15, die an den Innenflächen der Arme 13, 13' anliegen, eine Führung des Scharnierelements in einer Ebene bewirken, während die hier erläuterten Rippen eines T- oder Doppel-T-förmigen Verschlussteils 9 das Scharnierelement 3 in einer zweiten, senkrecht zur ersten Ebene verlaufenden Ebene führen. Diese Ausgestaltung zeichnet sich also dadurch aus, dass das Scharnierelement 3 innerhalb des Gehäuses 7 in der Ausnehmung 17 spielfrei eine Bewegung ausführen kann, die in Richtung der Längsachse des Federscharniers 1 verläuft.

Die Führung des Scharnierelements 3 in zwei Ebenen ist sehr vorteilhaft, besonders dann, wenn das Scharnierteil als Stanzbiegeteil ausgebildet ist, also aus einem flachen Material, vorzugsweise Blech, gestanzt und dann in seine U-förmige Gestalt gebogen wird. Wenn also auch das Scharnierelement 3 aus einem dünnen Material hergestellt ist, wird es mittels des Verschlussteils 9 sehr gut geführt, sodass sich die relativ geringe Eigenstabilität des Scharnierelements 3 keinesfalls nachteilig auswirkt.

Diese Bewegung des Scharnierelements 3 findet beim Öffnen und Schließen der Bügel gegenüber dem Mittelteil einer Brille statt. Dies ist grundsätzlich bekannt, sodass darauf und auf die bekannte Funktion eines derartigen Federscharniers nicht näher eingegangen wird.

Zur Befestigungseinrichtung ist noch Folgendes festzuhalten: Die hier beschriebene Schraube 35 kann auch direkt in ein Gewinde eingreifen, das an der Innenfläche der Öffnung 45 des Grundkörpers 15 vorgesehen ist. In diesem Fall kann auf ein Innengewinde in der Öffnung 33 des Gehäuses 7 verzichtet werden. Anstelle der einen beschriebenen Schraube kann auch eine Madenschraube oder ein Stift vorgesehen werden, der durch die Öffnung 33 in die Öffnung 45 im Grundkörper 15 hineinragt. Schließlich kann in die Öffnung 45 auch eine in das Gehäuse 7 eingebrachte Sicke eingreifen. Die verschiedenen Befestigungsmöglichkeiten sind grundsätzlich bekannt, sodass hier nicht näher darauf eingegangen wird.

Das in Figur 1 dargestellte Gehäuse 7 des Federscharniers 1 wird durch das Ende eines Bügels 51 gebildet, in den die Ausnehmung 17 eingebracht ist. Die Ausnehmung zeigt einen rechteckigen Querschnitt. Dieser kann bei Bügeln aus Metall durch Stoßen oder Räumen hergestellt werden. Wenn der Bügel 51 aus Kunststoff besteht oder zumindest in seinem Endbereich Kunststoff umfasst, ist die Herstellung einer Ausnehmung 17 mit einem rechteckigen Querschnitt bereits bei der Herstellung möglich.

Die Breite der Ausnehmung 17 ist so gewählt, dass deren Seitenflächen mit den Seitenflächen der Arme 13 und 13' in Berührung stehen, wenn das Scharnierelement 3 in die Ausnehmung 17 eingesetzt wird. Die Seitenflächen dienen daher der Führung des Scharnierelements 3. Die Höhe der Ausnehmung 17 ist so dimensioniert, dass die Oberflächen 49, 49' und die gegenüberliegenden Unterseiten der Arme 13 und 13' auf dem Boden 47 der Ausnehmung 17 aufliegen. Auch so wird eine optimale Führung des Scharnierelements 3 in der Ausnehmung 17 gewährleistet. Die Hauptkräfte der Führung des Scharnierelements werden allerdings von dem Verschlussteil 9 aufgefangen, das deshalb vorzugsweise aus Metall besteht. Es wird hier ein Material gewählt, das gute Gleiteigenschaften mit den Armen 13, 13' des Scharnierelements 3 aufweist.

Die Stirnseite 53 des Gehäuses 7 ist mit einer Ausnehmung 55 versehen, die im Wesentlichen rechteckförmig ausgebildet ist, sodass die Seitenfläche 27 und die gegenüberliegende Seitenfläche der Verdrehsicherung 19 möglichst spielfrei anliegen. Die Verdrehsicherung 19 liegt also im zusammengebauten Zustand des Federscharniers 1 mit ihrem freien über den Grundkörper 15 nach oben überstehendem Ende in der Ausnehmung 55. Die Höhe der Verdrehsicherung 19 ist so gewählt, dass die Verdrehsicherung flächig mit der Oberseite 31 des Gehäuses 7 abschließt. Die Tiefe der Ausnehmung 55 ist etwas geringer als die Dicke der Verdrehsicherung 19, sodass diese etwas über die Stirnseite 53 vorsteht. Die Ausgestaltung der Verdrehsicherung 19 wird deshalb so gewählt, dass von den Scharnieraugen in Figur 1 nach hinten in Richtung auf das Gehäuse 7 vorspringenden Nasen 57, 57' rechts und links an den Seitenflächen, von denen nur die Seitenfläche 27 in Figur 1 sichtbar ist, der Verdrehsicherung 19 anliegen. Auf diese Weise werden einer Verdrehung des Scharnierelements 3 im Inneren der Ausnehmung 17 im Gehäuse 7 sehr hohe Kräfte entgegengesetzt.

Beim Zusammenbau des Federscharniers 1 wird das Scharnierelement 3 in die Ausnehmung 17 eingeführt. Die Tiefe der Ausnehmung 17 ist so gewählt, dass nach dem Einführen des Scharnierelements 3 in die Ausnehmung 17 die Nasen 57, 57' an der Stirnfläche 53 anliegen. Dann werden das Federelement 5 und das Verschlussteil 9 zwischen die beiden Arme 13 und 13' des Scharnierelements eingebracht und ebenfalls in die Ausnehmung 17 eingeschoben. Wenn das Verschlussteil 9 ganz in die Ausnehmung 17 eingebracht ist, liegt die Verdrehsicherung 19, beziehungsweise das obere, über den Grundkörper 19 vorstehende Ende, in der Ausnehmung 55.

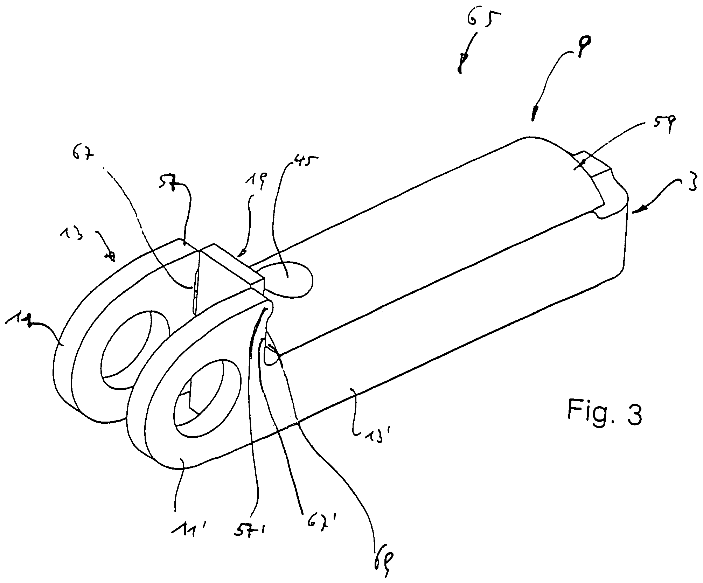

Wird, wie oben ausgeführt, das Verschlussteil 9 mit mindestens einer Nase beziehungsweise mit Rippen ausgestattet, sodass sich ein T- beziehungsweise Doppel-T-förmiger Grundkörper 15 des Verschließelements 9 ergibt, so können das Scharnierelement 3, das Federelement 5 und das Verschlussteil 9 vormontiert werden, worauf unten anhand von Figur 3 näher eingegangen wird.

Bei den bisherigen Erläuterungen wurde davon ausgegangen, dass es sich bei dem Gehäuse 7 um den Endbereich eines Brillenbügels 51 handelt. Es ist sehr wohl auch möglich, das Scharnierelement 3, das Federelement 5 und das Verschlussteil 9 in einer Ausnehmung 17 einzubringen, die im Mittelteil einer Brille vorgesehen ist. In diesem Fall bildet dann das Mittelteil das Gehäuse 7 des Federscharniers 1.

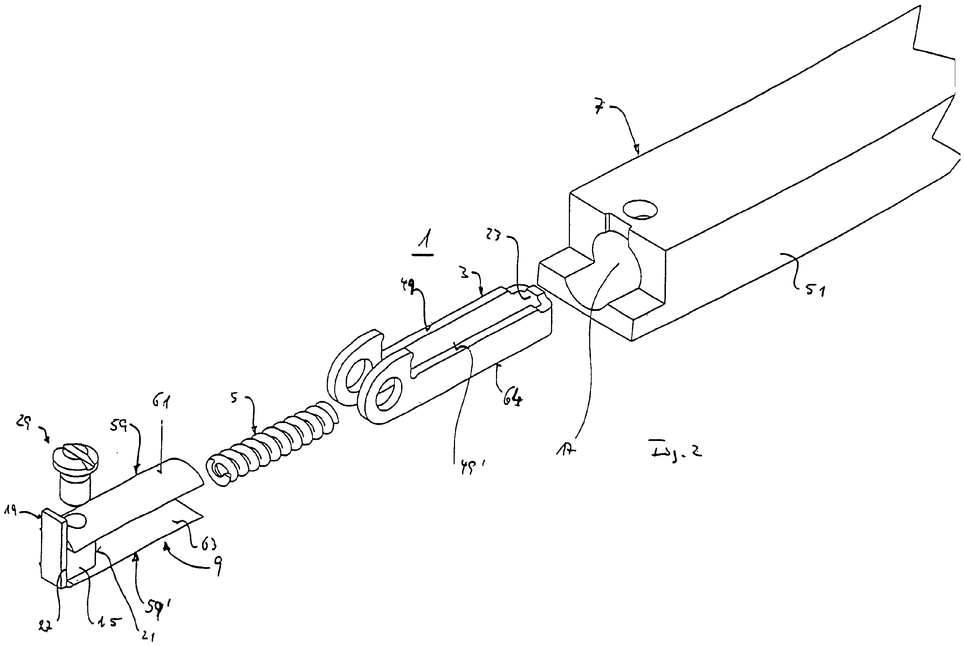

Figur 2 zeigt ein abgewandeltes Ausführungsbeispiel eines Federscharniers 1. Gleiche und funktionsgleiche Teile sind mit gleichen Bezugsziffern versehen, sodass insofern auf die Beschreibung zu Figur 1 verwiesen wird. Das Federscharnier 1 weist wiederum ein Scharnierelement 3, ein Federelement 5 sowie ein Gehäuse 7 auf. Es ist auch wiederum ein Verschlussteil 9 vorgesehen, das von einer Befestigungsvorrichtung 29 im Inneren des Gehäuses 7 gehalten werden kann.

Gegenüber dem in Figur 1 dargestellten Ausführungsbeispiel ist das Verschlussteil 9 abgewandelt, außerdem weist in Figur 2 die Ausnehmung 17 einen runden Querschnitt auf; sie ist also nicht viereckig ausgebildet, wie dies bei dem Ausführungsbeispiel nach Figur 1 der Fall ist. Daher werden die übrigen Teile des Federscharniers 1 hier nicht mehr im Einzelnen erläutert.

Das Verschlussteil 9 weist einen Grundkörper 15 mit einer Verdrehsicherung 19 auf. Es gilt hier für dieses Element das zu Figur 1 Gesagte entsprechend. Bei dem in Figur 2 dargestellten Ausführungsbeispiel gehen von dem Grundkörper 15 mindestens ein, hier zwei Vorsprünge 59, 59' aus, die vorzugsweise identisch ausgebildet sind. Es wird daher im Folgenden lediglich auf den oberen Vorsprung 59 eingegangen. Das hier Gesagte gilt dann entsprechend für den unteren Vorsprung 59'.

Der Vorsprung 59 weist eine Breite auf, die größer ist als die des Grundkörpers 15. Er springt daher gegenüber den Seitenflächen des Grundkörpers 15 sowie der Seitenfläche 27 und der gegenüberliegenden Seitenfläche der Verdrehsicherung 19 vor. Die Oberseite 61 des oberen Vorsprungs 59 ist gewölbt, vorzugsweise kreisbogenförmig gewölbt. Zwischen dem oberen Vorsprung 59 und dem unteren Vorsprung 59' ist ein Freiraum, der so gewählt ist, dass die untere Seite des oberen Vorsprungs auf den Oberflächen 49, 49' der Arme 13, 13' zu liegen kommen, während die Oberseite 63 des unteren Vorsprungs 59', 65 auf der Unterseite 64 der Arme 49, 49' anliegt. Vorzugsweise erstrecken sich die Vorsprünge 59 und 59' praktisch über die gesamte Länge des Scharnierelements 3, zumindest über die Länge der Arme 13, 13', soweit sie im Inneren des Gehäuses 7 angeordnet sind.

Bei Zusammenbau des Federscharniers 1 gemäß Figur 2 wird das Scharnierelement 3 in die Ausnehmung 17 des Gehäuses 7 eingebracht, die hier allerdings zylindrisch ausgebildet, vorzugsweise durch eine Bohrung in das Gehäuse 7 hergestellt ist. Der Innendurchmesser der Ausnehmung 17 ist so groß, dass das Scharnierelement 3 ohne Weiteres dort einführbar ist. Der Radius der Innenfläche der Ausnehmung 17 ist so gewählt, dass die Außenflächen der Vorsprünge 59 und 59', die, wie gesagt, vorzugsweise kreisbogenförmig ausgebildet sind, flächig an der Innenseite der Ausnehmung 17 anliegen.

Das Scharnierelement 3, das Federelement 5 sowie das Verschlussteil 9 sind hier so ausgebildet, dass eine vormontierbare Baugruppe 65 aus gerade diesen Elementen geschaffen werden kann, die dann als Ganzes in die Ausnehmung 17 einführbar ist.

Figur 3 zeigt diese Baugruppe 65 in perspektivischer Ansicht. Gleiche und baugleiche Teile sind mit gleichen Bezugsziffern versehen, sodass auf die vorangegangene Beschreibung zu den Figuren 1 und 2 eingegangen wird, um Wiederholungen zu vermeiden.

Die in Figur 3 dargestellte Baugruppe 65 besteht also aus dem Scharnierelement 3, dem Verschlussteil 9, zwischen dessen Vorsprüngen, von denen hier der Vorsprung 59 erkennbar ist, das Federelement 5 eingeschlossen ist. Das Verschlussteil wird zur Herstellung der Baugruppe 65 zwischen die Arme 13 und 13' des Verschlussteils eingeschoben. Falls bei diesen auch nur ein Vorsprung, beispielsweise der Vorsprung 59, vorgesehen ist, der breiter ist als der Grundkörper 15 des Verschlussteils 9, müssen die Arme 13 und 13' etwas auseinandergebogen werden, da der zwischen diesen vorhandene Freiraum nur so breit ist, dass der hier nicht sichtbare Grundkörper des Verschlussteils 9 und das Verriegelungselement 19 dazwischenliegen können. Da eben der Vorsprung 59 breiter ist als die genannten Teile, müssen die Arme 13 und 13' etwas auseinandergebogen werden, wenn das Verschlussteil 9 gemeinsam mit den zwischen den Armen 13 und 13' liegenden Federelement 5 zwischen die Arme 13 und 13' geschoben wird.

Das Scharnierelement 3 besteht aus einem elastischen Material, vorzugsweise aus gestanztem und geformtem Blech. Daher federn nach dem Auseinanderbiegen der Arme 13, 13' zum Einführen des Verschlussteils 9 diese wieder zusammen, wenn das Verschlussteil 9 gänzlich zwischen die Arme eingeschoben ist. Die Scharnieraugen 11, 11' sind, wie oben gesagt, höher als die Arme 13, 13', sodass an deren unterhalb der Nasen 57, 57' gelegenen Rückseite 67, 67' die Vorderseiten des Vorsprung 59, von denen hier lediglich die Vorderseite 69 zu sehen ist, an dieser Rückseite anschlägt. Das Federelement 5 stützt sich, wie anhand von Figur 1 erläutert, mit ihrem einen Ende an der Rückseite 21 des Grundkörpers 5 des Verschlussteils 9 ab und mit seinem anderen Ende innen an der Basis 23 des U-förmigen Scharnierteils 3. Dabei ist das Federelement 5 so ausgelegt, das in zusammengebautem Zustand der Baugruppe 65 eine Vorspannung gegeben ist, die das Verriegelungselement 9, beziehungsweise die Vorderseiten 69 des Vorsprungs 59 gegen die Rückseite 67, 67' der Scharnieraugen 11, 11' andrückt. Die dabei gegebenen Reibungskräfte und wegen der gegenüber den Rückseiten 67, 67' vorspringenden Nasen 57, 57' gegebenen Sicherung bleiben die zu der Baugruppe 65 vormontierten Teile als handhabbare Einheit erhalten, die als Ganzes in die Ausnehmung 17 im Gehäuse 9 eingeschoben werden kann. Nach dem Einbau der Baugruppe 65 in das Gehäuse 7 liegen die Nasen 57, 57', wie bei dem Ausführungsbeispiel gemäß Figur 1, an der Stirnseite 53 des Gehäuses an, sodass die Verdrehsicherung 19, beziehungsweise deren oberes Ende, zwischen den Nasen 57 und 57' zu liegen kommt. Es ergibt sich damit eine besonders gute Verdrehsicherung, weil das Scharnierelement 3 zusätzlich von dem Grundkörper 15, der zwischen den Armen 13, 13' des Scharnierelements liegt, von den Vorsprüngen 59, 59' sicher geführt wird, wobei der Grundkörper 15 eine seitliche Bewegung des Scharnierelements 3 gegenüber dem Verriegelungselement 9 verhindert und die Vorsprünge 59, 59' eine Auf- und Abbewegung des Scharnierelements gegenüber dem Verriegelungselement. Es wird hier also wiederum eine Führung in zwei Ebenen sichergestellt und eben die besonders gute Verdrehsicherung.

Es sei hier noch mal besonders darauf hingewiesen, dass Verschlussteile 9 besonders bevorzugt werden, die Vorsprünge 59, 59' aufweisen, deren Breite größer ist als die des Grundkörpers 15 des Verschlussteils 9. An den Seitenflächen des Grundkörpers 15 liegen die Arme 13, 13' des Scharnierelements 3 an und werden dadurch sicher in einer ersten Ebene geführt. Dadurch, dass die Vorsprünge 59, 59' breiter sind als der Grundkörper 15, überragen die Vorsprünge die Arme 13, 13' und liegen oben und auch vorzugsweise unten an diesen an. Dadurch ergibt sich die besonders gute Führung des Scharnierelements 3, auch wenn dieses, wie oben beschrieben, aus einem elastischen Material, vorzugsweise aus gestanztem und geformtem Blech besteht.

Auch bei dem Ausführungsbeispiel gemäß Figur 2 ist also die Dicke der Verdrehsicherung 19 so gewählt, dass deren oberes Ende etwas aus der Ausnehmung 55 gegenüber der Stirnseite 57 vorspringt und zwischen den Nasen 57, 57' der Scharnieraugen 11, 11' liegt. Die Oberseite der Verdrehsicherung 19 liegt auch hier bündig in der Oberseite 31 des Gehäuses 7, sodass sich ein sehr guter optischer Eindruck des Federscharniers ergibt.

Auch das in Figur 2 und 3 dargestellte Verschlussteil 9 weist, wie das in Figur 1 dargestellte Verschlussteil 9 eine Öffnung 45 im Grundkörper 15 auf, in die eine Befestigungseinrichtung 29, beziehungsweise deren Schraube 35 eingreifen kann. Es gilt das oben Gesagte: Die Schraube 35 kann mit einem Stift 43 in die Öffnung 45 eingreifen. Denkbar ist es auch, dass die Schraube mit ihrem Schaft 41 in das Verschlussteil 9 eingeschraubt wird. Schließlich ist es auch hier möglich, durch eine Öffnung 33 im Gehäuse 7 bis in die Öffnung 45 im Grundkörper 15 einen Stift einzuführen, um das Verschlussteil 9 sicher im Gehäuse 7 zu verankern. Schließlich kann bei Gehäusen aus Metall eine Sicke in die Öffnung 45 des Grundkörpers 15 eingreifen, um diesen in der Ausnehmung 17 zu sichern.

Bei dem in Figur 2 dargestellten Ausführungsbeispiel kann das Gehäuse 7 wiederum Teil eines Bügels 51 oder aber eines Mittelteils einer Brille sein. Für die Erfindung ist es nicht wesentlich, ob das Gehäuse 7 aus dem Bügel 51 oder aus dem Mittelteil besteht. Hier ist in Abweichung zu Figur 1 eine zylindrische Ausnehmung 17 vorgesehen, auf die das Verschlussteil 9 abgestimmt ist.

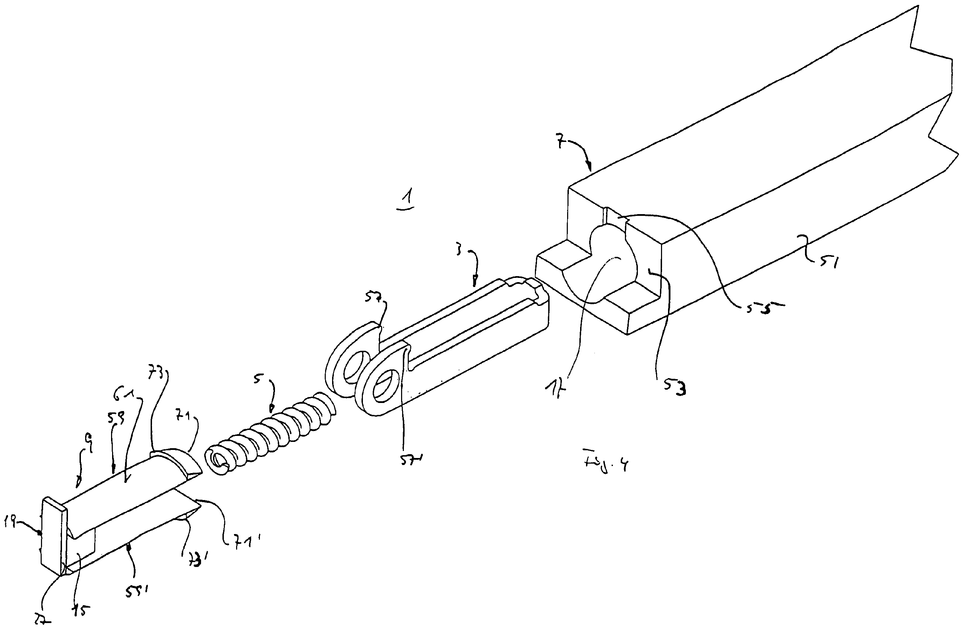

Ein weiteres Ausführungsbeispiel des Federscharniers 1 ist in Figur 4 in Explosionsdarstellung wiedergegeben. Gleiche Teile sind mit gleichen Bezugsziffern versehen, sodass insofern auf die vorangegangene Beschreibung verwiesen wird, um Wiederholungen zu vermeiden. Das Federscharnier umfasst ein Scharnierelement 3, ein Federelement 5, ein Gehäuse 7 und ein Verschlussteil 9.

Das Verschlussteil 9 dieses Ausführungsbeispiels ist gegenüber dem zweiten Ausführungsbeispiel gemäß den Figuren 2 und 3 leicht abgewandelt: An den freien Enden 71, 71' der von dem Grundkörper 15 ausgehenden Vorsprünge 59, 59' sind Verriegelungsnasen 73, 73' vorgesehen, die über die Oberseite 63 des Vorsprungs 59 beziehungsweise die hier nicht sichtbare entsprechende Oberseite des Vorsprungs 59' etwas vorspringen. Sie dienen dazu, das Verriegelungselement 9 im Inneren der Ausnehmung 17, die bei dem hier dargestellten Ausführungsbeispiel wiederum zylindrisch ausgebildet ist, verriegelnd zu halten. Die Innenfläche der Ausnehmung 17 kann dazu mit einer Ringnut oder mit kreissegmentartigen Vertiefungen versehen werden, die gegenüber der übrigen Innenfläche der Ausnehmung 17 radial nach außen zurückspringen. Da die Vorsprünge 59, 59' elastisch ausgebildet sind, können sie beim Einführen in die Ausnehmung 17 etwas zusammengedrückt werden. Aufgrund der Eigenelastizität werden die Verriegelungsnasen 73, 73' nach außen gedrängt und gleiten beim Einschieben des Verriegelungselements 9 in die Ausnehmung 17 an deren Innenfläche entlang, bis sie nach außen in entsprechende Ausnehmungen verriegelnd eingreifen können. Die Verriegelung des Verschlussteils 9 erfolgt derart, dass die Verriegelungsnasen 73, 73' dann in die Hinterschnitte eingreifen, wenn die Verdrehsicherung 19, insbesondere ihr oberes freies Ende in die Ausnehmung 55 in der Stirnseite 53 des Gehäuses 7 eingreift. Auch hier ist vorgesehen, dass die Verdrehsicherung 19 etwas dicker ist als die Tiefe der Ausnehmung 55, sodass sich die anhand von Figur 3 erläuterte Sicherung des Scharnierelements 3 durch das Zusammenspiel zwischen der Verdrehsicherung 19 und den Nasen 57, 57' ergibt.

Eine Sicherung gegen ein Verdrehen des Verschlussteils 9 im Inneren des Gehäuses ist hier ausschließlich durch die Verdrehsicherung 19 gegeben, da eine Befestigungseinrichtung 29 hier entfällt und der Halt des Verschlussteils 9 ausschließlich mit Hilfe der Verriegelungsnasen 73, 73' in der Innenfläche der Ausnehmung 17 erfolgt.

Auch bei dem in Figur 4 dargestellten Ausführungsbeispiel wird das Scharnierelement 3 von den Seitenflächen des Grundkörpers 15 des Verschlussteils 9 geführt, die an den Innenflächen der Arme 13, 13' anliegen, und/oder durch die Seitenflächen der Verdrehsicherung 19, von der hier die Seitenfläche 27 sichtbar ist. Diese liegen ebenfalls an der Innenseite der Arme 13, 13' an.

Senkrecht zu dieser Führungsebene erfolgt die Führung des Scharnierelements 3 zwischen den Vorsprüngen 59 und 59', wie dies anhand der Figuren 2 und 3 erläutert wurde. Es ist also auch hier eine Führung des Scharnierelements 3 in zwei Ebenen gegeben.

Das Scharnierelement 3, das Federelement 5 und das Verschlussteil 9 können, wie anhand der Figuren 2 und 3 erläutert, zu einer hier nicht dargestellten Baugruppe 69 zusammengefügt werden, die dann als Ganzes in die Ausnehmung 17 des Gehäuses 7 eingeschoben und dort verrastet wird.

Das Gehäuse 7 kann, wie oben erläutert, durch den Endbereich eines Bügels 51 gebildet werden, oder aber durch ein Mittelteil einer Brille.

Die Führung des Scharnierelements 3 am Verschlussteil 9 ergibt sich auch bei den gegenüber Figur 1 abgewandelten Ausführungsbeispielen, bei denen das Verschlussteil 9 T- beziehungsweise doppel-T-förmig ausgebildet ist. In diesem Fall ist auch hier bei Abwandlung des Verschlussteils 9 gegenüber Figur 1 die Herstellung einer vormontierten Baugruppe möglich.

Es zeigt sich, dass gerade die Herstellung der vormontierbaren Baugruppe besonders vorteilhaft ist, außerdem die bei derartigen Baugruppen vorgesehene Ausgestaltung des Verschlussteils, bei der dessen Grundkörper 15 T-förmig beziehungsweise doppel-T-förmig ausgebildet ist, sodass das Scharnierelement 3 nicht nur seitlich an den Innenseiten der Arme 13, 13' sondern zumindest auch oben an der Oberseite 49, 49' der Arme 13, 13' geführt wird oder darüber hinaus auch an der Unterseite des Scharnierelements 3, die in Figur 2 mit der Bezugsziffer 65 gekennzeichnet wurde.

Aus den Erläuterungen bezüglich des Verschlussteils 9, das in Abweichung zu dem in Figur 1 dargestellten Ausführungsbeispiel auch T- beziehungsweise Doppel-T-förmig ausgebildet sein kann, beziehungsweise mindestens einen, vorzugsweise zwei von seinem Grundkörper 15 ausgehende Vorsprünge 59, 59' aufweist, ist ersichtlich, dass ein derartiges einer Führung des Scharnierteils 3 in zwei Ebenen dienendes Verschlussteil auch in herkömmliche Gehäuse eingesetzt werden kann, also bei Federscharnieren verwendbar ist, deren Gehäuse nicht integraler Teil des Endes eines Bügels oder Mittelteils einer Brille ist.

## Patentansprüche

1. Federscharnier einer Brille mit zwei Bügeln und einem Mittelteil, mit
- einem U-förmigen, zwei Scharnieraugen (11,11') aufweisenden Scharnierelement (3),
- einem Federelement (5),
- einem eine Ausnehmung (17) zur Aufnahme des Scharnierelements (3) und des Federelements (5) aufweisenden Gehäuse (7), das auch Teil der Bügel (51) und/oder Teil des Mittelteils der Brille ist, und mit
- einem das Scharnierelement (3) im Gehäuse (7) haltenden Verschlussteil (9), wobei
- das Verschlussteil (9) zwischen Armen (13,13') des U-förmigen Scharnierelements (3) und in der Ausnehmung (17) des Gehäuses (7) anordenbar und
- mittels einer Befestigungseinrichtung (29) im Gehäuse (7) fixierbar festlegbar ist, und wobei
- mindestens eine Fläche des Verschlussteils (9) an der Innenfläche der Ausnehmung (17) im Gehäuse (7) anliegt, wobei
- das Verschlussteil (9) einen Grundkörper (15) aufweist, dessen Breite dem Abstand zwischen den Armen (13,13') des Scharnierelements (3) entspricht, sodass der Grundkörper (15) spielfrei zwischen den Armen (13,13') angeordnet ist, **dadurch gekennzeichnet, dass**
- von dem Grundkörper (15) des Verschlussteils (9) mindestens ein Vorsprung (59,59') ausgeht, der parallel zu der Längserstreckung der Ausnehmung (17) in die Ausnehmung (17) hineinragt, wobei
- der mindestens eine von dem Grundkörper (15) des Verschlussteils (9) ausgehende Vorsprung (59,59') auf Oberflächen (49,49') oder einer Unterseite (64) der Arme (13,13') des Scharnierelements (3) anliegt, wobei
- die Breite des mindestens einen Vorsprungs (59,59') größer ist als die Breite des Grundkörpers (15), sodass der mindestens eine Vorsprung (59,59') auf den Oberflächen (49,49') oder der Unterseite (64) der Arme (13,13') anliegt, wobei
- das Scharnierelement (3), das Federelement (5) und das Verschlussteil (9) eine vormontierbare Baugruppe (65) bilden, sodass das Scharnierelement (3), das Federelement (5) und das Verschlussteil (9) als Ganzes in die Ausnehmung (17) einführbar ist, und wobei
- das Gehäuse (7) eine erste Öffnung (33) aufweist, wobei der Grundkörper (15) eine zweite Öffnung (45) aufweist, wobei eine Schraube (35), eine Madenschraube oder ein Stift durch die erste Öffnung (33) in die zweite Öffnung (45) hineinragen kann, um das Verschlussteil (9) in der Ausnehmung (17) zu fixieren.

2. Federscharnier nach Anspruch 1, **gekennzeichnet durch** eine Verdrehsicherung (19), die in das Gehäuse (7) eingreift.

3. Federscharnier nach Anspruch 2, **dadurch gekennzeichnet, dass** die Verdrehsicherung (19) eine Lauffläche aufweist und/oder deren Breite dem Abstand zwischen den Armen (13,13') des Scharnierelements (9) entspricht.

4. Federscharnier nach einem der vorhergehenden Ansprüche, **dadurch gekennzeichnet, dass** das Verschlussteil (9) - in einer Querschnittsebene gesehen, auf der die Längserstreckung der Ausnehmung (17) senkrecht steht - zumindest bereichsweise T-förmig oder doppel-T-förmig ausgebildet ist.

5. Federscharnier nach einem der vorhergehenden Ansprüche, **dadurch gekennzeichnet, dass** von dem Grundkörper (15) des Verschlussteils (19) zwei Vorsprünge (59,59') ausgehen, zwischen denen das Scharnierelement (3) anordenbar ist.

6. Federscharnier nach einem der vorhergehenden Ansprüche, **dadurch gekennzeichnet, dass** eine den Oberflächen (49,49') oder der Unterseite (64) der Arme (13,13') abgewandte Außenseite des mindestens einen Vorsprungs (59,59'), gegebenenfalls die Außenseiten beider Vorsprünge (59,59'), gewölbt ausgebildet ist/sind.

7. Federscharnier nach Anspruch 6, **dadurch gekennzeichnet, dass** die Außenseite des Vorsprungs (59,59') beziehungsweise die Außenseiten der Vorsprünge (59,59') kreisbogenförmig ausgebildet ist/sind.

8. Federscharnier nach einem der vorhergehenden Ansprüche, **dadurch gekennzeichnet, dass** die Breite beider Vorsprünge (59,59') größer ist als die Breite des Grundkörpers (15) des Verschlussteils (9).

## Claims

1. A spring hinge for spectacles comprising two side pieces and a central part, comprising
- a U-shaped hinge element (3) having two hinge eyes (11, 11'),
- a spring element (5),
- a housing (7), which has a cavity (17) for accommodating the hinge element (3) and the spring element (5) and which is also part of the side pieces (51) and/or part of the central part of the spectacles, and comprising
- a closure part (9), which holds the hinge element (3) in the housing (7), wherein
- the closure part (9) can be arranged between arms (13, 13') of the U-shaped hinge element (3) and in the cavity (17) of the housing (7) and
- can be fixedly defined in the housing (7) by means of a fastening device (29), and wherein
- at least one surface of the closure part (9) bears on the inner surface of the cavity (17) in the housing, (7) wherein
- the closure part (9) has a base body (15), the width of which corresponds to the distance between the arms (13, 13') of the hinge element (3), so that the base body (15) is arranged between the arms (13, 13') without play,
**characterised in that**
- at least one protrusion (59, 59'), which protrudes into the cavity (17) parallel to the longitudinal extension of the cavity (17), starts from the base body (15) of the closure part (9), wherein
- the at least one protrusion (59, 59'), which starts from the base body (15) of the closure part (9), bears on surfaces (49, 49') or on an underside (64) of the arms (13, 13') of the hinge element (3), wherein
- the width of the at least one protrusion (59, 59') is larger than the width of the base body (15), so that the at least one protrusion (59, 59') bears on the surfaces (49, 49') or the underside (64) of the arms (13, 13'), wherein
- the hinge element (3), the spring element (5), and the closure part (9) form a pre-assemblable assembly (65), so that the hinge element (3), the spring element (5), and the closure part (9) can be inserted into the cavity (17) as a whole, and wherein
- the housing (7) has a first opening (33), wherein the base body (15) has a second opening (45), wherein a screw (35), a grub screw or a pin can protrude through the first opening (33) into the second opening (45), in order to fix the closure part (9) in the cavity (17).

2. The spring hinge according to claim 1, **characterised by** a locking device (19), which engages with the housing (7).

3. The spring hinge according to claim 2, **characterised in that** the locking device (19) has a bearing surface and/or a width which corresponds to the distance between the arms (13, 13') of the hinge element (9).

4. The spring hinge according to any one of the preceding claims, **characterised in that** the closure part (9) - viewed in a cross sectional plane, on which the longitudinal extension of the cavity (17) is vertically upright - is embodied in a T-shaped or doubleT-shaped manner at least area by area.

5. The spring hinge according to any one of the preceding claims, **characterised in that** two protrusions (59, 59'), between which the hinge element (3) can be arranged, start from the base body (15) of the closure part (19).

6. The spring hinge according to any one of the preceding claims, **characterised in that** an outer side of the at least one protrusion (59, 59'), which faces away from the surfaces (49, 49') or from the underside (64) of the arms (13, 13'), possibly the outer sides of both protrusions (59, 59') is/are embodied so as to be curved.

7. The spring hinge according to claim 6, **characterised in that** the outer side of the protrusion (59, 59') or the outer sides of the protrusions (59, 59'), respectively, is/are embodied in a circular arc-shaped manner.

8. The spring hinge according to any one of the preceding claims, **characterised in that** the width of both protrusions (59, 59') is larger than the width of the base body (15) of the closure part (9).

## Revendications

1. Charnière à ressort d'une lunette comprenant deux branches et une pièce centrale, comprenant
- un élément de charnière (3) formé en U et présentant deux oeillets de charnière (11, 11'),
- un élément de ressort (5),
- un logement (7) présentant un évidement (17) pour recevoir l'élément de charnière (3) et l'élément de ressort (5), qui fait également partie des branches (51) et/ou partie de la pièce centrale des lunettes, et comprenant
- une pièce de fermeture (9) maintenant l'élément de charnière (3) dans le logement (7), dans lequel
- la pièce de fermeture (9) peut être agencée entre des bras (13, 13') de l'élément de charnière (3) formé en U et dans l'évidement (17) du logement (7) et
- peut être immobilisée pour pouvoir être fixée dans le logement (7) au moyen d'un système de fixation (29), et dans lequel
- au moins une face de la pièce de fermeture (9) repose sur la face intérieure de l'évidement (17) dans le logement (7), dans lequel
- la pièce de fermeture (9) présente un corps de base (15) dont la largeur correspond à l'écart entre les bras (13, 13') de l'élément de charnière (3), de sorte que le corps de base (15) est disposé sans jeu entre les bras (13, 13'),
**caractérisée en ce**
- **qu'**au moins une saillie (59, 59') part du corps de base (15) de la pièce de fermeture (9), laquelle pénètre dans l'évidement (17) parallèlement à l'extension longitudinal de l'évidement (17), dans lequel
- l'au moins une saillie (59, 59') sortant du corps de base (15) de la pièce de fermeture (9) repose sur des faces supérieures (49, 49') ou une sous-face (64) des bras (13, 13') de l'élément de charnière (3), dans lequel
- la largeur de l'au moins une saillie (59, 59') est supérieure à la largeur du corps de base (15) de sorte que l'au moins une saillie (59, 59') repose sur les surfaces (49, 49') ou la sous-face (64) des bras (13, 13'), dans lequel
- l'élément de charnière (3), l'élément de ressort (5) et la pièce de fermeture (9) forment un module (65) pouvant être prémonté, de sorte que l'élément de charnière (3), l'élément de ressort (5) et la pièce de fermeture (9) peuvent être introduits comme un tout dans l'évidement (17), et dans lequel
- le logement (7) présente une première ouverture (33), dans lequel le corps de base (15) présente une seconde ouverture (45), dans lequel une vis (35), une vis sans tête ou une broche peut pénétrer à travers la première ouverture (33) jusque dans la seconde ouverture (45) pour fixer la pièce de fermeture (9) dans l'évidement (17).

2. Charnière à ressort selon la revendication 1, **caractérisée par** une sécurité anti-rotation (19) qui se met en prise dans le logement (7).

3. Charnière à ressort selon la revendication 2, **caractérisée en ce que** la sécurité anti-rotation (19) présente une surface de roulement et/ou que sa largeur correspond à l'écart entre les bras (13, 13') de l'élément de charnière (9).

4. Charnière à ressort selon l'une des revendications précédentes, **caractérisée en ce que** la pièce de fermeture (9) - vu dans un plan transversal dans lequel l'étirement longitudinal de l'évidement (17) est vertical - est formée en T ou en double T au moins par tronçons.

5. Charnière à ressort selon l'une des revendications précédentes, **caractérisée en ce que** deux saillies (59, 59') partent du corps de base (15) de la pièce de fermeture (19), entre lesquelles l'élément de charnière (3) peut être agencé.

6. Charnière à ressort selon l'une des revendications précédentes, **caractérisée en ce qu'**une face extérieure de l'au moins une saillie (59, 59') détournée des surfaces (49, 49') ou de la sous-face (64) des bras (13, 13'), le cas échéant les faces extérieures des deux saillies (59, 59'), est/sont formée(s) bombée(s).

7. Charnière à ressort selon la revendication 6, **caractérisée en ce que** la face extérieure de la saillie (59, 59'), respectivement les faces extérieures des saillies (59, 59'), est/sont formée(s) en arc de cercle.

8. Charnière à ressort selon l'une des revendications précédentes, **caractérisée en** ce la largeur des deux saillies (59, 59') est supérieure à la largeur du corps de base (15) de la pièce de fermeture (9).
